(19) Europäisches Patentamt
European Patent Office
Office européen des brevets

(11) **EP 0 808 441 B1**

(12) **EUROPEAN PATENT SPECIFICATION**

(45) Date of publication and mention of the grant of the patent:
**06.10.2004 Bulletin 2004/41**

(51) Int Cl.[7]: **F24D 19/10**, F24D 5/00, F24J 2/50

(21) Application number: **96902419.9**

(22) Date of filing: **13.02.1996**

(86) International application number:
**PCT/IE1996/000006**

(87) International publication number:
**WO 1996/025632 (22.08.1996 Gazette 1996/38)**

(54) **AIR HEATING AND HEAT RECOVERY VENTILATION SYSTEM WITH SOLAR PANELS**

LUFTHEIZUNG UND BELÜFTUNGSSYSTEM MIT WÄRMERÜCKGEWINNUNG MIT SONNENKOLLEKTOREN

SYSTEME DE VENTILATION POUR LE CHAUFFAGE DE L'AIR ET LA RECUPERATION DE CHALEUR AVEC PANNEAUX SOLAIRES

(84) Designated Contracting States:
**AT BE CH DE DK ES FR GB GR IE IT LI LU MC NL PT SE**

(30) Priority: **13.02.1995 IE 950113**

(43) Date of publication of application:
**26.11.1997 Bulletin 1997/48**

(73) Proprietor: **Kollectaire Technology Limited**
**Dublin 24 (IE)**

(72) Inventor: **QUIGLEY, William**
**Dublin 16 (IE)**

(74) Representative: **McKeown, Yvonne Mary et al**
**c/o MacLachlan & Donaldson,**
**47 Merrion Square**
**Dublin 2 (IE)**

(56) References cited:
| | |
|---|---|
| EP-A- 0 384 787 | WO-A-86/07622 |
| DE-A- 2 600 882 | FR-A- 2 476 806 |
| FR-A- 2 492 955 | FR-A- 2 522 122 |
| GB-A- 2 046 895 | US-A- 4 129 116 |
| US-A- 4 721 349 | |

**EP 0 808 441 B1**

**Description**

The present invention relates to an air heating and heat recovery ventilation system with one or more solar panels and more particularly with solar panels of the type which comprise a housing, a cover on the housing which transmits incident solar radiation into the housing, a solar radiation absorber in the housing, and air inlet and outlet ports to enable air to be circulated through the panel to collect heat from the panel.

Document FR-A-2476806 discloses the features of an air ventilation system as found in the precharacterising portion of claim 1. Known solar panels are of the type described in EP-A-0 384 787.

An object of the present invention is to provide a more efficient air heating and heat recovery ventilation system for use with solar panels.

This object is achieved by means of a ventilation system having the features according to the characterising part of claim 1.

The features of the invention will be apparent from a consideration of the attached Claims 1 to 13.

The present invention accordingly provides an air heating and heat recovery ventilation system comprising one or more solar panels for absorbing and collecting energy from the sun during daylight hours; an energy processing unit for combining and distributing energy from different sources; a boiler which is interlinked to the system via the energy processing unit; a control means which provides a means for co-ordinating and controlling all the components and functions of the system; and an air distribution system which allows for heat to be distributed throughout a house via a network of conduits. wherein the energy processing unit includes an air handling unit which comprises an air-to-water heat exchanger and means for forcing the heated air from the solar panels through the heat exchanger, thereby transferring heat to water in the domestic hot water supply system; and forcing warm air emerging from the heat exchanger to flow around the house, characterised in that the energy processing unit comprises a four chamber housing, each chamber having a port, the first chamber being the fresh air intake chamber and having means to control and stop the intake of fresh air, a second chamber being the chamber which directs air to the solar panel and having a fan to force air through the system; a third chamber being the chamber which receives air returning from the solar panel and having means to control and stop the flow of air from the solar panel; and a fourth chamber being the chamber which directs heated air to the house and having the air-to-water heat exchanger, and the control means in the first chamber comprises a first damper movable between an open and closed position, the first damper in the closed position blocking the air intake into the unit and allowing communication between the first and fourth chambers, and in which the control means in the third chamber comprises a second damper movable between an open and closed position, the second damper in the closed position blocking the air flow from the solar panel and allowing communication between the second and third chambers.

The invention will now be described more particularly with reference to the accompanying drawings in which are shown, by way of example only, two embodiments of the invention.

In the drawings:

Figure 1 is a sectional view of a solar panel for use with the present invention;

Figure 2 is a sectional view of a second embodiment of a solar panel for use with the present invention;

Figure 3 is a schematic view of the components of an heating and heat recovery ventilation system of the inventions including a solar panel as shown in Figure 1 or Figure 2 shown operating in "solar" mode;

Figure 4 is a schematic view of the air heating and heat recovery ventilation system shown operating in semi-solar mode;

Figure 5 is a schematic view of the air heating and heat recovery ventilation system operating in "boiler" mode;

Figure 6 is a schematic view of the heat recovery and ventilation unit used in the air heating and heat recovery ventilation system shown in Figures 3, 4 and 5;

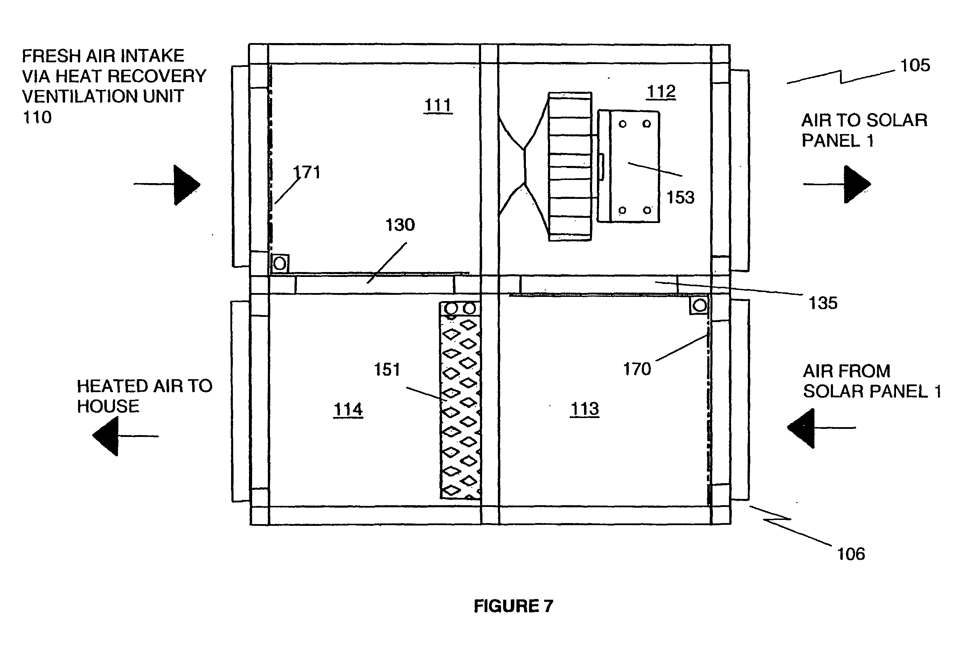

Figure 7 is a schematic view of the air handling unit used in the system shown in Figures 3, 4 and 5;

Figure 8 is a schematic view of the heat recovery and ventilation system in a second embodiment of the invention; and

Figure 9 is a detailed schematic view of the heat recovery and ventilation system in the second embodiment showing the energy processing unit (EPU).

In the drawings, like features are identified by like numerals.

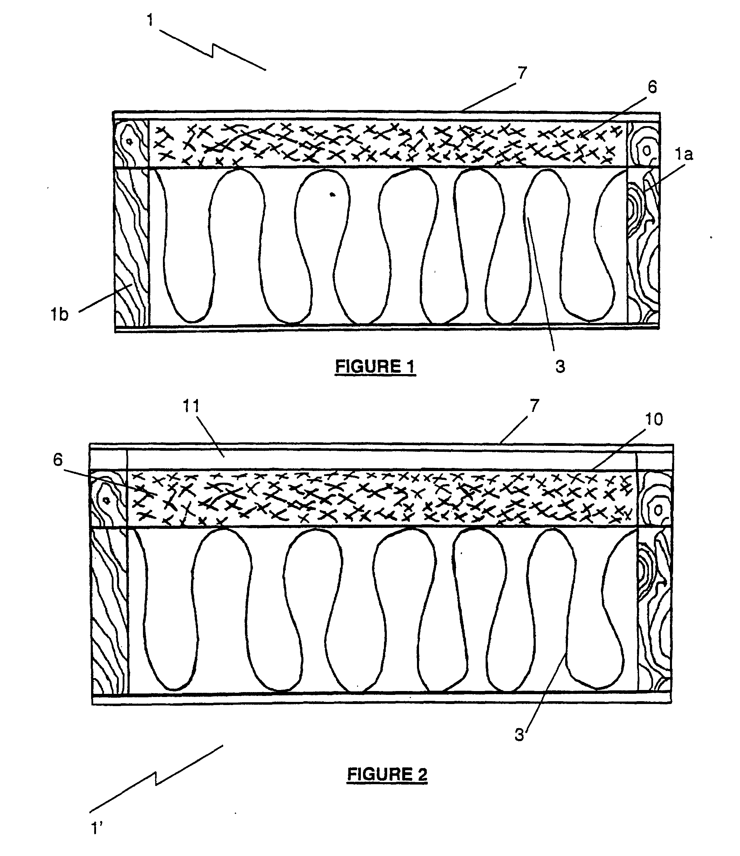

Referring to Figure 1 of the drawings, the solar panel 1 fits within a rectangular space frame constructed from timber members 1a, 1b. A sheet of plasterboard with a foil backing is provided beneath the timber frame. Next is a layer of long strand fibreglass 3; and a solar radiation absorber 6, comprising a matrix of glass fibre which is bonded by a phenol formaldehyde resin or melamine resin. A housing cover 7 is fitted to the top of the unit and comprises a sheet of toughened glass, with a coating applied on its underside. The coating has a low emittance ("low E") value. The solar panel also has a cover retention means comprising aluminium extrusions and silicone gaskets (not shown) and a series of air inlet ports (not shown) across one end of the panel, and a series of air outlet ports (not shown) across the other end of the panel to allow for circulation of air through the solar panel.

Referring now to Figure 2, the alternative solar panel is indicated generally by the reference numeral 1'. The solar panel 1' includes the features of the solar panel 1 in addition to a layer of PTFE 10 over the absorber 6, an air gap 11 preferably in the range 15-40 mm, between the PTFE layer 10 and the housing cover 7, thus in effect creating a "double glazed" solar panel.

In operation, during daylight hours, direct or diffuse solar radiation falling on the housing cover 7 is transmitted through the housing cover 7 with the "low E" coating provided on the underside thereof, through to the solar radiation absorber 6. The absorber 6 is of very open construction and the radiation passes down through the volume of air which permeates the absorber, and undergoes multiple reflections off the surface of the absorber material and also off the upper surface of the foil backing on the plasterboard and the "low E" coating on the undersurface of the housing cover 7. In this manner the radiation gives up its energy, warming the volume of air with the solar panel 1, 1'. Air enters the inlet ports at one end of the solar panel 1, 1' passes through the absorber 6 where it is heated, and leaves through ports at the other end of the solar panel 1, 1'. The air passing along the solar panel is widely and evenly distributed across the full width and height of the panel, resulting in uniform flow which gives maximum heat collection, and minimum pressure drop.

In operation, during night hours, when there is no incident solar radiation, the solar panel 1, 1' may be operated in an alternative mode in which air at a temperature lower than the ambient outdoor air temperature is circulated through the solar panel 1, where it is heated by thermal conduction through the housing cover 7, and the heat thus collected may be transferred to a heat store.

Referring specifically to the solar panel 1; the advantage of including the air gap 11 is that it results in the provision of a "double glazed" solar panel 1' which has an extremely low coefficient of thermal conductivity value.

An equation for indicating the overall effectiveness of a solar panel is as follows:

$$\frac{\text{Total heat loss}}{\text{collector efficiency}} = \frac{U_T}{\eta^o}$$

The typical value for the prior art solar panels is 11 whereas the typical value of the double glazed solar panel 1' is 4.5. This indicates that the solar panel 1' is much more effective than the prior art type of panel. The solar panel 1 has a level of effectiveness between these two values.

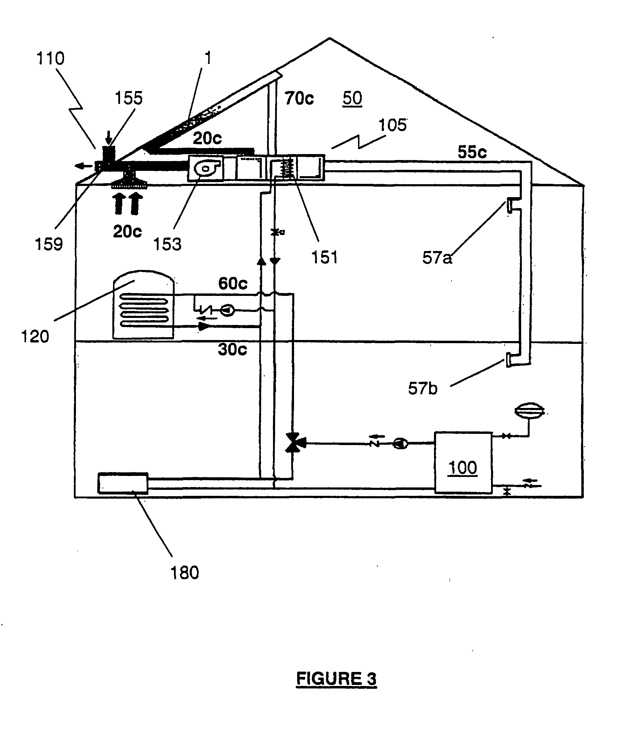

Referring now to Figure 3, the air heating and heat recovery ventilation system including the solar panels 1 will be described. The system includes solar panels 1 or 1' for absorbing and collecting energy from the sun during daylight hours and an energy processing unit indicated generally by reference numeral 50. The energy processing unit 50 comprising an air handling unit 105 and a heat recovery ventilation unit 110 is usually located in the attic of a house and combines and distributes energy from various different sources. The system also includes a boiler 100 which is interlinked to the system via the energy processing unit 50. A control means (not shown) provides a means for co-ordinating and controlling all the components and functions of the system. An air handling unit, indicated generally by reference numeral 105 is also provided which allows for heat to be distributed throughout the house via a network of conduits.

The air handling unit 105 comprises a four chamber housing 106, the first chamber 111 being the fresh air intake chamber and has a damper 171 to control and stop the intake of fresh air,

a second chamber 112 being the chamber which directs air to the solar panel 1 and housing the fan 153 to force air through the system;

a third chamber 113 being the chamber which receives air returning from the solar panel 1 and has a damper 170 to control and stop the flow of air from the solar panel 1; and

a fourth chamber 114 being the chamber which directs heated air to the house and having the air-to-water heat exchanger 151.

The damper 171 is movable between an open and closed position. In the closed position it blocks the air intake into the unit and allows communication between the first and fourth chambers 111 and 114 through orifice 130. The damper 170 is movable between an open and closed position. In the closed position, it blocks the air flow from the solar panel 1 and allows communication between the second and third chambers 112 and 113 through orifice 135.

The heating system includes a high output radiator or booster 180 which can be used when a high heat output is required in a short time.

The air heating and heat recovery ventilation system can be operated in several different modes, namely, "solar" mode in which the system can rely on solar energy and can be used to deliver hot water with or without heating the house; "semi-solar" in which the system can be operated in the solar mode when there is sufficient solar energy for it to do so and in which heat can be added to from the boiler; and "boiler" mode in which the system relies entirely on the boiler to supply the required heat to the house as well as hot water in the domestic hot water supply.

Referring to Figure 3, the operation of the system in "solar mode" will now be described. This mode is applicable in Spring, Summer and Autumn. In the summer, when there is an abundance of solar energy, the system of the invention can be used to provide hot water from the domestic hot water supply without actually heating the house. The electronic control system ensures that when the house has reached a desired preset temperature, the system delivers no more energy to the house.

During late Spring and early Autumn when the house requires moderate amounts of energy to heat it, the system will operate in solar mode, as shown in Figure 3, transferring heat into the house and also heating water in the domestic hot water cylinder 120.

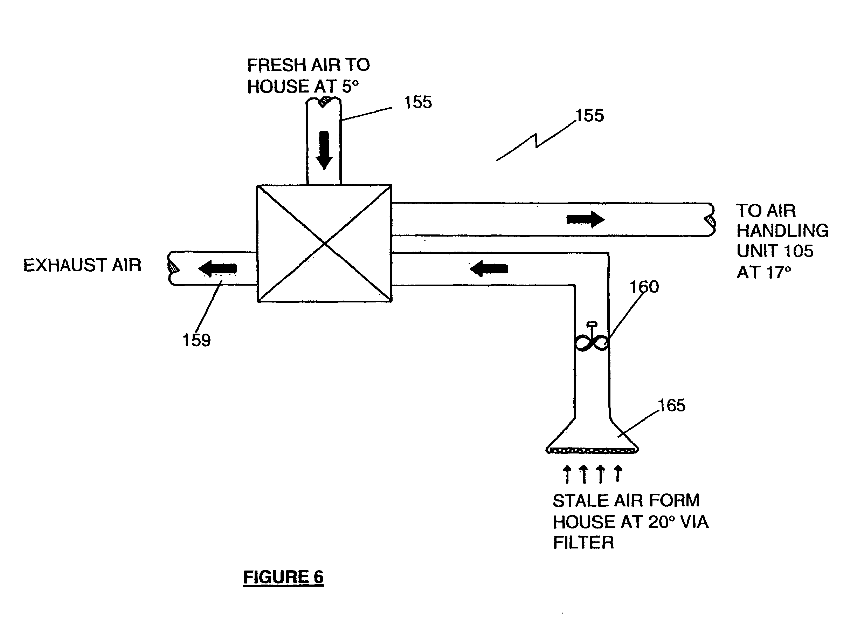

When the system is operated in solar mode, air is forced to flow over the solar panel 1 under the action of the fan 160 in the heat recovery ventilation unit 110. This results in the temperature of the air increasing from 20°C to 70°C. This heated air is forced to flow to the air handling unit 105, where with damper 170 open, the heated air passes over the air-to-water heat exchanger 151. This results in the heat being transferred from the heated air to the water in the heat exchanger 151 so that heated water emerges from the heat exchanger 151. This hot water, at 60°C, is pumped to the coil in the domestic hot water cylinder 120 which results in the provision of a cylinder of hot water. In the meantime, the warm air exiting from the heat exchanger 151 is forced throughout the house under action of fan 153 in the air handling unit 105, provided the house requires heat. The warm air is fed through the ducting system into all of the rooms via air diffusers 57a, 57b in the ceilings. Air is also removed from the house and is forced to flow over the heat recovery ventilation unit 110 (see Figure 6) under action of fan 160 in order to transfer its heat to the fresh air being brought into the house via conduit 155 (air-to-air heat exchange). This fresh air is forced by fan 153 in the heat recovery ventilation unit 110 to the solar panels 1 to start the cycle again.

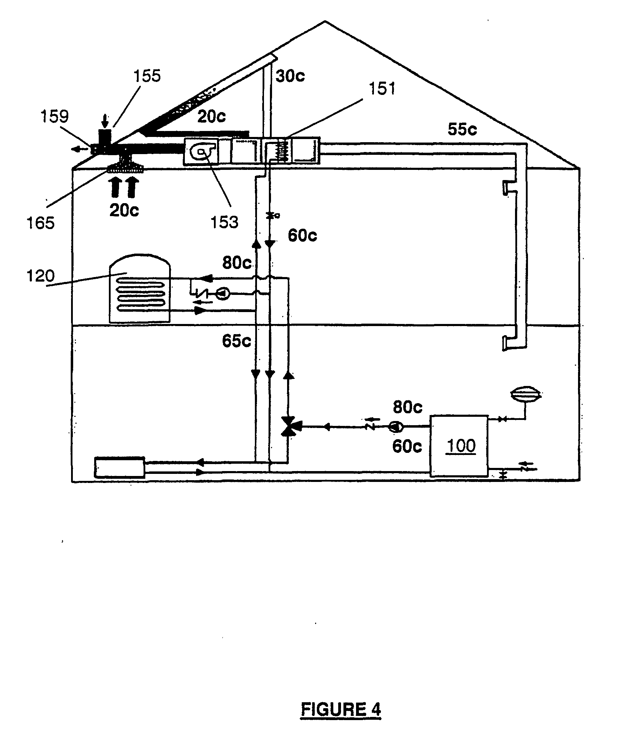

The system of the invention can also be operated in semi-solar mode.
This will be described with reference to Figure 4. During winter the air heating and heat recovery ventilation system of the invention can be operated so as to take advantage of whatever solar energy is available. On very bright Winter days the system will operate in "solar" mode as described above with reference to Figure 3 while there is sufficient solar energy available for it to do so.

In bright but cloudy conditions, the system will operate in a semi-solar mode as will be described below. In the semi-solar mode, the house is heated partially by way of solar energy and this can be supplemented by an oil or gas fired boiler 100. This semi-solar mode would only be operational if the boiler 100 is switched on during the day-time. If the boiler 100 is not switched on, the system will attempt to keep the temperature in the house as close as possible to the pre-set temperature which has been programmed into the control panel.

In this mode, the air is circulated in the same route as in the solar mode described above except that in the semi-solar mode, heat is added to the air by way of hot water from the boiler 100 which is pumped to the air to water heat exchanger 151. When the system is operating in this "semi solar" mode, the solar collectors 1 are only raising the temperature of the air from 20°C to 30°C. It is the boiler 150 that makes the air hotter i.e. to 55°C. In this mode the water in the domestic hot water cylinder is also heated.

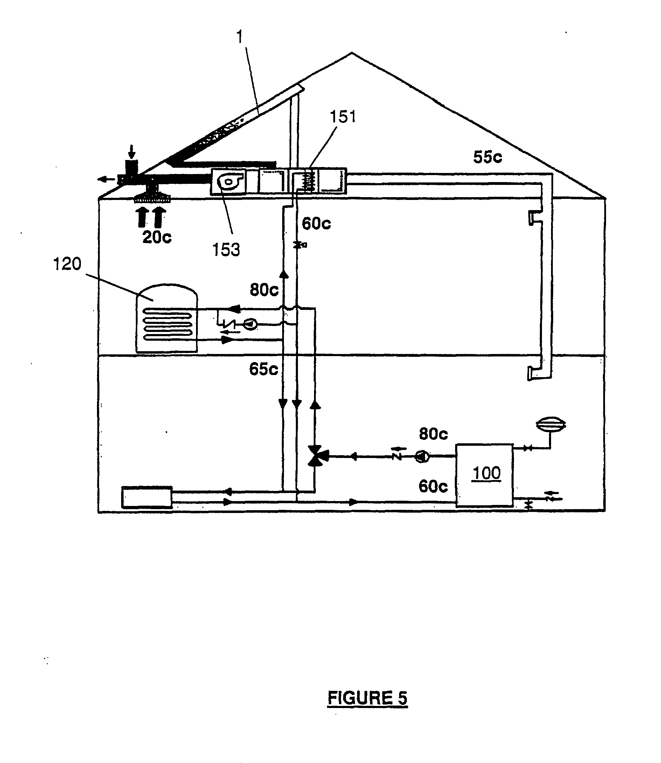

The system of the invention can also be operated in "boiler" mode. This will be described with reference to Figure 5. In Winter, particularly during late November, December and January, there will be very dark, dull days during which the system relies on the boiler 100 to supply the required heat to the house as well as hot water. The "boiler" mode is also used at night time to supply heat to the house if it is required.
In "boiler" mode, no air is directed by fan over the solar panels 1. Fresh air from the outside atmosphere, is fanned over the heat recovery ventilation unit 110 to remove heat from the "stale" air being fanned out of the house. The fresh air is then directed to the air handling unit 105 from which it is fanned to the air to water heat exchanger 151. The air-to-water heat exchanger 151 is being heated by hot water pumped from the boiler 100. The air leaves the heat exchanger at about 55° typically - it can be hotter or cooler depending on the water temperature setting of the boiler 100. This warm air is then fanned through the ducting system to each air diffuser in every room of the house. Stale air is fanned over the heat recovery ventilation unit 110 where its heat is recovered and conducted to the incoming fresh air prior to being extracted out of the house. The fresh air, with the recovered heat from the stale air, is fanned to the air handling unit 105 to begin the cycle again.

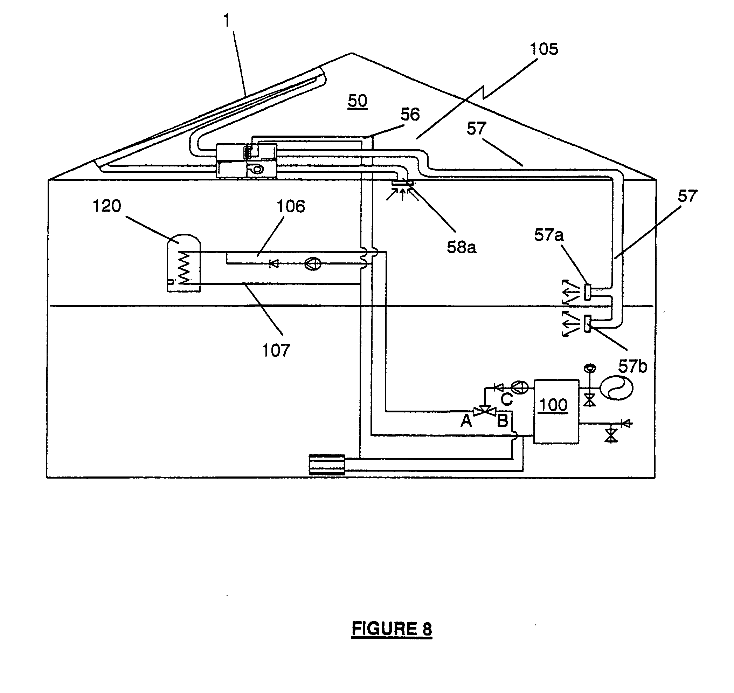

Referring now to Figure 8, an alternative air heating and heat recovery ventilation system including the solar panels 1 will be described. The system comprises solar panels 1, an energy processing unit indicated generally by reference numeral 50', a boiler 100', a control means (not shown) which provides a means for co-ordinating and controlling all the components and functions of the system and an air distribution system indicated generally by reference numeral 105', which allows for heat to be distributed throughout the house via a network of conduits.

The heating system includes a high output radiator 180' which can be used when a high heat output is required in a short time.

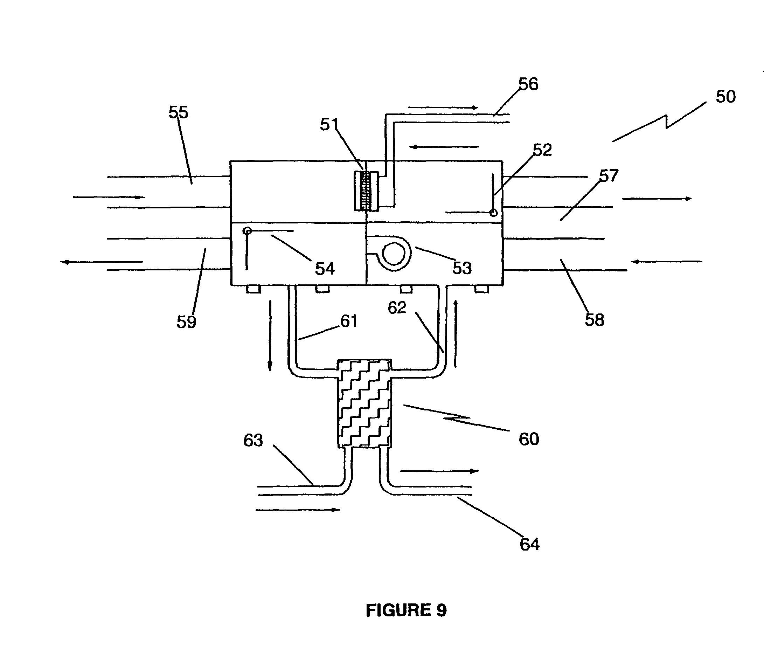

Referring now to Figure 9, the energy processing unit 50' and its operation in the second embodiment of the system of the invention will be described in more detail. The energy processing unit comprises a conduit 55 for bringing warm air from the solar collectors 1 to the energy processing unit, an air/water heat exchanger 51, a conduit 56 for carrying water from the energy processing unit to around the house, dampers 52,54 for controlling the direction of air flow, a conduit 57 for carrying air to supply the house and a conduit 58 for carrying air extracted from the house to the fan 53 and a conduit 59 for carrying air from the energy processing unit back to the solar collectors 1. The energy processing unit also includes a heat recovery unit 60 which comprises an air/air heat exchanger. The heat recovery unit 60 is linked to the energy processing unit via conduits 61,62 and air from atmosphere can enter the unit 60 via conduit 63 and air exits from the unit 60 to atmosphere via conduit 64. The air/air heat exchanger is a cross flow type heat exchanger made up of aluminium plates across which heat exchange occurs between warmer and cooler air streams.

Heated air collected by the solar panels 1 is pumped into the energy processing unit 50' via conduit 55 and enters an air/water heat exchanger 51 where the heat energy from the air is transferred to the cooler water in the heat exchanger 51, thereby warming the water in the heat exchanger 51.

Depending on the direction in which the damper 52 is open, the air emerging from the heat exchanger may

(a) when the damper 52 is in the horizontal position as shown in Figure 9 be directed towards conduit 57 which leads to two vents 57a and 57b through which warm air emerges to supply the house; or alternatively,

(b) when the damper 52 is in the vertical position as shown in Figure 9 it will result in the warm air stream emerging from the heat exchanger 51 being directed towards the fan 53. The fan 53 directs the air stream towards the damper 54.

Again, depending on the direction in which the damper 54 is open, the air stream may be directed either

(c) when the damper 54 is in the horizontal position as shown in Figure 9, towards conduit 59 leading from the energy processing unit 50' to the solar collectors 1; or

(d) when the damper 54 is in the vertical position as shown in Figure 4, no air is being supplied to the solar collector 1, therefore no significant heat is being collected from the collectors 1. In this case, the heat exchanger 51 may be used to heat air which is directed through conduit 57.

The direction of the dampers 52,54 respectively effectively controls the temperature of water and air supplied to the house since for example in option (c), warm air entering from the solar collectors 1 will obviously result in warmer water emerging from the heat exchanger 51.

When the fan 53 is operating, air in the system is continuously being refreshed through conduits 63 and 62 with a feed of fresh air, with approximately 10% of air being dumped to atmosphere through conduits 61 and 64 which provide the bleeding of air from the system at generally the same rate as the feed of air.

Warm water which emerges from the heat exchanger 51 is carried from the energy processing unit 50 via conduit 56. This warm water can be pumped to the standard household hot water cylinder 120 via conduit 106. Water emerging from the cylinder 120 is carried via conduit 107.

Alternatively, if the water emerging from the energy processing unit 50 is not hot enough for household use, it can be pumped to the boiler 100 where it is heated and then subsequently pumped to the cylinder 120. Air is extracted from the house via extractor unit 58a and enters the fan 53 in the energy processing unit 50.

The control means used to or-ordinate and control the components and functions of the embodiments of the invention is not described in detail as it can be one of a number of control devices currently available on the market for heating and ventilation systems. Typically, it will include a control panel for use by the user, one or more thermostats throughout the house, a programmable logic controller, various transducers and relays for opening and closing valves and dampers and generally controlling the electrically operated components of the system.

**Claims**

1. An air heating and heat recovery ventilation system comprising

one or more solar panels (1) for absorbing and collecting energy from the sun during daylight hours;
an energy processing unit (50) for combining and distributing energy from different sources;
a boiler (100) which is interlinked to the system via the energy processing unit;
a control means (25) which provides a means for co-ordinating and controlling all the components and functions of the system; and
an air distribution system which allows for heat to be distributed throughout a house via a network of conduits,
wherein the energy processing unit (50) includes an air handling unit (105) which comprises an air-to-water heat exchanger (151) and means for forcing the heated air from the solar panels (1) through said heat exchanger (151), thereby transferring heat to water in the domestic hot water supply system; and forcing warm air emerging from said heat exchanger (151) to flow around the house,
**characterised in that** the energy processing unit (50) comprises a four chamber (111, 112, 113, 114) housing (106), each chamber having a port, the first chamber (111) being the fresh air intake chamber and having means to control and stop the intake of fresh air,

a second chamber (112) being the chamber which directs air to the solar panel and having a fan (153) to force air through the system;

a third chamber (113) being the chamber which receives air returning from the solar panel and having means to control and stop the flow of air from the solar panel (1), and

a fourth chamber (114) being the chamber which directs heated air to the house and having the air-to-water heat exchanger (151), and

the control means in the first chamber (111) comprises a first damper (171) movable between an open and closed position, the first damper in the closed position blocking the air intake into the unit and allowing communication between the first and fourth chambers (111, 114), and in which the control means in the third chamber comprises a second damper (170) movable between an open and closed position, the second damper (170) in the closed position blocking the air flow from the solar panel (1) and allowing communication between the second and third chambers (112, 113).

2. An air heating and heat recovery ventilation system, as claimed in Claim 1, in which the air handling unit includes an air-to-air heat exchanger (110) for extracting heat from air returning from the house.

3. An air heating and heat recovery ventilation system as claimed in Claim 2, in which the air returning from the house flows through a conduit (155) which is separate from the conduit conducting heated air to the house and means are provided to expel all the air returning from the house after it has passed through the air-to-air heat exchanger (110).

4. An air heating and heat recovery ventilation system as claimed in Claim 2, in which the air returning from the house flows through a conduit (155) which provides for mixing with fresh air entering the system and means are provided to expel a portion of the mixed air after it has passed through the air-to-air exchanger (110).

5. An air heating and heat recovery ventilation system as claimed in claim 1, in which the boiler (100) is operable to provide hot water to the air-to-water heat exchanger (151) in the fourth chamber (114) of the energy processing unit; whereby the air being directed to the house can be heated by the air-to-water heat exchanger (151).

6. An air heating and heat recovery ventilation system as claimed in any of the preceding claims, in which the solar panel (1) comprises an elongate housing including a solar radiation transmitting cover (7) and a reflective base (4) held in spaced apart relationship by side and end members (1a, 1b), a solar radiation absorber (6) within the housing, inlet means enabling fluid to enter the absorber (6) at one end of the housing, and outlet means enabling the fluid to exit from the absorber (6) at an opposite end of the housing; **characterised in that** the solar radiation transmitting cover (7) comprises a sheet of toughened glass, having a coating applied on its underside, the coating having a low emittance ("low E") value.

7. An air heating and heat recovery ventilation system according to Claim 6, wherein the cover (7) is spaced apart from the solar radiation absorber (6) and an intermediary layer is located therebetween, the intermediary layer including an air gap (11) spaced from the cover.

8. An air heating and heat recovery ventilation system according to Claim 7, in which a layer of transparent sheeting (10) is spaced from the cover (7) to define the said air gap (11), so as to provide a "double glazed" solar panel collection.

9. An air heating and heat recovery ventilation system according to Claim 8, in which the layer of transparent sheeting (10) comprises a layer of polytetrafluorethene (PTFE).

**Patentansprüche**

1. Lufterhitzungs- und Wärmerückgewinnungsventilationssystem, umfassend

einen oder mehrere Sonnenkollektoren (1) zum Absorbieren und Speichern von Sonnenenergie während der Stunden mit Tageslicht;

eine Energieverarbeitungseinheit (50) zum Kombinieren und Verteilen von Energie aus verschiedenen Quellen;

einen Boiler (100), der mit dem System über die Energieverarbeitungseinheit verbunden ist;

ein Steuermittel (25), das ein Mittel zum Koordinieren und Steuern aller Komponenten und Funktionen des Systems vorsieht; und

ein Luftverteilungssystem, das ermöglicht, Wärme in einem Haus über ein Netzwerk von Leitungen zu verteilen,

wobei die Energieverarbeitungseinheit (50) eine Luftbehandlungseinheit (105) reguliert, die einen Luft-Wasser-Wärmetauscher (151) und Mittel zum Zwingen der erhitzten Luft von den Sonnenkollektoren (1) durch den Wärmetauscher (151), wodurch Wärme auf Wasser in dem Haushaltsheißwasserversorgungssystem übertragen ist, und zum Zwingen von warmer Luft, die aus dem Wärmetauscher (151) entweicht, zum Strömen durch das Haus umfasst,

**dadurch gekennzeichnet, dass** die Energieverarbeitungseinheit (50) ein Gehäuse (106) mit vier Kammern (111, 112, 113, 114) umfasst, wobei jede Kammer eine Öffnung aufweist, wobei die erste Kammer (111) die Frischluftaufnahmekammer ist und Mittel zum Steuern und Anhalten des Aufnehmens von Frischluft aufweist,

eine zweite Kammer (112) die Kammer ist, welche Luft zum Sonnenkollektor leitet und ein Gebläse (153) zum Zwingen von Luft durch das System aufweist;

eine dritte Kammer (113) die Kammer ist, die Luft empfängt, welche von dem Sonnenkollektor zurückströmt und Mittel zum Steuern und Anhalten des Luftstroms von dem Sonnenkollektor (1) aufweist; und

eine vierte Kammer (114) die Kammer ist, welche erwärmte Luft zum Haus leitet und den Luft-Wasser-Wärmetauscher (151) aufweist, und

das Steuermittel in der ersten Kammer (111) einen ersten Schieber (171) umfasst, der zwischen einer offenen und einer geschlossenen Position beweglich ist, wobei der erste Schieber in der geschlossenen Position die Luftaufnahme in die Einheit blokkiert und eine Verbindung zwischen der ersten und vierten Kammer (111, 114) ermöglicht, und wobei das Steuermittel in der dritten Kammer einen zweiten Schieber (170) umfasst, der zwischen einer offenen und einer geschlossenen Position beweglich ist, wobei der zweite Schieber (170) in der geschlossenen Position den Luftstrom von dem Sonnenkollektor (1) blockiert und eine Verbindung zwischen der zweiten und dritten Kammer (112, 113) ermöglicht.

2. Lufterhitzungs- und Wärmerückgewinnungsventilationssystem nach Anspruch 1, wobei die Luftbehandlungseinheit einen Luft-Luft-Wärmetauscher (110) zum Entziehen von Wärme aus Luft, die von dem Haus zurückströmt, beinhaltet.

3. Lufterhitzungs- und Wärmerückgewinnungsventilationssystem nach Anspruch 2, wobei die Luft, die von dem Haus zurückströmt, durch eine Leitung (155) strömt, die von der Leitung getrennt ist, die erwärmte Luft zum Haus leitet, und Mittel zum Ausstoßen der gesamten Luft, die von dem Haus zurückströmt, nachdem sie durch den Luft-Luft-Wärmetauscher (110) geströmt ist, vorsieht.

4. Lufterhitzungs- und Wärmerückgewinnungsventilationssystem nach Anspruch 2, wobei die Luft, die von dem Haus zurückströmt, durch eine Leitung (155) strömt, die das Vermischen mit Frischluft vorsieht, welche in das System eintritt, und Mittel zum Ausstoßen eines Teils der vermischten Luft, nachdem sie durch den Luft-Luft-Wärmetauscher (110) geströmt ist, vorsieht.

5. Lufterhitzungs- und Wärmerückgewinnungsventilationssystem nach Anspruch 1, wobei der Boiler (100) zum Zuführen von heißem Wasser an den Luft-Wasser-Wärmetauscher (151) in der vierten Kammer (114) der Energieverarbeitungseinheit betriebsbereit ist; wobei die Luft, die zum Haus geleitet ist, durch den Luft-Wasser-Wärmetauscher (151) erhitzt sein kann.

6. Lufterhitzungs- und Wärmerückgewinnungsventilationssystem nach einem der vorhergehenden Ansprüche, wobei der Sonnenkollektor (1) ein verlängertes Gehäuse, das eine Sonnenstrahlungsdurchlassabdeckung (7) und einen reflektierenden Unterbau (4) beinhaltet, die in räumlich getrennter Beziehung durch Seiten- und Endglieder (la, 1b) gehalten sind, einen Sonnenstrahlungsabsorber (6) in dem Gehäuse, Einlassmittel, die ermöglichen, dass Fluid an einem Ende des Gehäuses in den Absorber (6) eintritt, und Auslassmittel, die ermöglichen, dass das Fluid an einem entgegengesetzten Ende des Gehäuses aus dem Absorber (6) austritt, umfasst; **dadurch gekennzeichnet, dass** die Sonnenstrahlungsdurchlassabdeckung (7) eine Scheibe aus vorgespanntem Glas umfasst, auf deren Unterseite eine Beschichtung aufgetragen ist, wobei die Beschichtung einen niedrigen Ausstrahlungswert ("niedrigen E-Wert") aufweist.

7. Lufterhitzungs- und Wärmerückgewinnungsventilationssystem nach Anspruch 6, wobei die Abdeckung (7) vom Sonnenstrahlungsabsorber (6) räumlich getrennt ist und dazwischen eine Zwischenschicht angeordnet ist, wobei die Zwischenschicht einen Luftspalt (11) beinhaltet, der von der Abdeckung räumlich getrennt ist.

8. Lufterhitzungs- und Wärmerückgewinnungsventilationssystem nach Anspruch 7, wobei eine Schicht von transparenter Verkleidung (10) zum Definieren des Luftspalts (11) von der Abdeckung (7) räumlich getrennt ist, um eine "doppelt verglaste" Sonnenkollektorenspeicherung vorzusehen.

9. Lufterhitzungs- und Wärmerückgewinnungsventilationssystem nach Anspruch 8, wobei die Schicht von transparenter Verkleidung (10) eine Schicht von Polytetrafluorethylen (PTFE) umfasst.

**Revendications**

1. Système de ventilation pour le chauffage de l'air et la récupération de la chaleur comprenant

un ou plusieurs panneaux solaires (1) pour absorber et collecter l'énergie solaire pendant les heures diurnes,

une unité de traitement de l'énergie (50) pour combiner et distribuer l'énergie provenant de différentes sources ;

une chaudière (100) interconnectée avec le système via l'unité de traitement de l'énergie ;

un moyen de commande (25) fournissant un moyen pour coordonner et commander tous les composants et fonctions du système, et

un système de distribution de l'air permettant de distribuer la chaleur à travers une maison via un réseau de conduits,

pour lequel l'unité de traitement de l'énergie (50) comporte une unité de traitement de l'air (105) comprenant un échangeur thermique air-eau (151) et des moyens pour forcer l'air chauffé provenant des panneaux solaires (1) à travers ledit échangeur thermique (151), transférant de la sorte de la chaleur à l'eau du système d'alimentation en eau chaude domestique, et forçant l'air chaud provenant dudit échangeur thermique (151) à circuler autour de la maison,

**caractérisé en ce que** l'unité de traitement de l'énergie (50) comprenne un châssis (106) à quatre chambres (111, 112, 113, 114), chaque chambre ayant un orifice, la première chambre (111) étant la chambre de prise d'air frais et ayant des moyens pour commander et interrompre la prise d'air frais, une deuxième chambre (112) étant la chambre qui dirige l'air vers le panneau solaire et qui comporte une soufflante (153) pour forcer l'air à travers le système ;

une troisième chambre (113) étant la chambre qui réceptionne l'air revenant du panneau solaire et présentant des moyens pour commander et interrompre le courant d'air provenant du panneau solaire (1), et

une quatrième chambre (114) étant la chambre qui dirige l'air chauffé vers la maison et comportant l'échangeur thermique air-eau (151),

et **en ce que** le moyen de commande dans la première chambre (111) comprenne un premier modérateur (171) pouvant se déplacer entre une position ouverte et fermée, le premier modérateur bloquant l'entrée de l'air dans l'unité lorsque en position fermée et permettant la communication entre la première et la quatrième chambre (111, 114), et où le moyen de commande dans la troisième chambre comprend un deuxième modérateur (170) pouvant se déplacer entre une position ouverte et fermée, le deuxième modérateur (170) bloquant le courant d'air en provenance du panneau solaire (1) lorsque en position fermée et permettant la communication entre la deuxième et la troisième chambre (112, 113).

2. Système de ventilation pour le chauffage de l'air et la récupération de la chaleur selon la revendication 1, pour lequel l'unité de traitement de l'air comporte un échangeur thermique air-air (110) pour extraire de la chaleur de l'air revenant de la maison.

3. Système de ventilation pour le chauffage de l'air et la récupération de la chaleur selon la revendication 2, pour lequel l'air revenant de la maison circule à travers un conduit (155) qui est indépendant du conduit dirigeant l'air chauffé vers la maison, et pour lequel des moyens sont fournis pour chasser tout l'air revenant de la maison après qu'il ait traversé l'échangeur thermique air-air (110).

4. Système de ventilation pour le chauffage de l'air et la récupération de la chaleur selon la revendication 2, pour lequel l'air revenant de la maison circule à travers un conduit (155) assurant le mélange avec de l'air frais pénétrant dans le système, et pour lequel des moyens sont fournis pour chasser une partie de l'air mélangé après qu'il ait traversé un échangeur thermique air-air (110).

5. Système de ventilation pour le chauffage de l'air et la récupération de la chaleur selon la revendication 1, pour lequel la chaudière (100) est prête à être exploitée pour fournir de l'eau chaude à l'échangeur de chaleur air-eau (151) dans la quatrième chambre (114) de l'unité de traitement de l'énergie, où l'air qui est dirigé vers la maison peut être chauffé par l'échangeur thermique air-eau (151).

6. Système de ventilation pour le chauffage de l'air et la récupération de la chaleur selon l'une quelconque des revendications précédentes, pour lequel le panneau solaire (1) comprend un châssis allongé comportant une couverture de transmission des radiations solaire (7) et une base réfléchissante (4) maintenues avec un espacement et à part l'une de l'autre par des éléments latéraux et d'extrémité (la, 1b), un absorbeur des radiations solaires (6) à l'intérieur du châssis, des moyens d'admission permettant au fluide de pénétrer dans l'absorbeur (6) à une extrémité du châssis et des moyens de sortie permettant au fluide de sortir de l'absorbeur (6) à une extrémité opposée du châssis, **caractérisé en ce que** la couverture de transmission des radiations solaires (7) comprenne une feuille en verre trempé avec un revêtement appliqué sur son dessous, le revêtement ayant une faible valeur d'émittance (« faible E »).

7. Système de ventilation pour le chauffage de l'air et la récupération de la chaleur selon la revendication 6, pour lequel la couverture (7) est espacée par rapport à l'absorbeur de radiations solaires (6) et avec une couche intermédiaire située entre les deux, la couche intermédiaire comprenant une couche d'air intermédiaire (11) avec un espace par rapport à la couverture.

8. Système de ventilation pour le chauffage de l'air et la récupération de la chaleur selon la revendication 7, pour lequel une couche de pellicule transparente (10) est espacée par rapport à la couverture (7) afin de définir ladite couche d'air intermédiaire (11) afin de fournir une collection de panneaux solaires à « double vitrage ».

9. Système de ventilation pour le chauffage de l'air et la récupération de la chaleur selon la revendication 8, pour lequel la couche de pellicule transparente (10) comprend une couche de polytétrafluréthylène (PTFE).

**FIGURE 1**

**FIGURE 2**

**FIGURE 3**

**FIGURE 4**

**FIGURE 5**

FRESH AIR TO
HOUSE AT 5°

155

155

TO AIR
HANDLING
UNIT 105
AT 17°

EXHAUST AIR

160

159

165

STALE AIR FORM
HOUSE AT 20° VIA
FILTER

**FIGURE 6**

EP 0 808 441 B1

14

AIR TO SOLAR PANEL 1

AIR FROM SOLAR PANEL 1

FRESH AIR INTAKE VIA HEAT RECOVERY VENTILATION UNIT 110

HEATED AIR TO HOUSE

105
106
135
112
153
170
113
111
130
151
114
171

**FIGURE 7**

**FIGURE 8**

FIGURE 9